# EUROPÄISCHE PATENTANMELDUNG

(11) **EP 3 888 760 A1**
(43) Veröffentlichungstag der Anmeldung: **06.10.2021**
(21) Anmeldenummer: 21155688.1
(22) Anmeldetag: 08.02.2021
(51) Int. Cl.: A62B 18/02

(54) **ATEMSCHUTZMASKE**

(30) Priorität: 03.04.2020 DE 102020109443
(71) Anmelder: Genau, Rico, 08393 Meerane (DE)
(72) Erfinder: Genau, Rico, 08393 Meerane (DE)
(74) Vertreter: Steiniger, Carmen

(57) **Zusammenfassung**

Die vorliegende Erfindung betrifft eine Atemschutzmaske mit einem eine Filterstruktur aufweisenden Maskenkörper und einer Kopfhalterung, wobei die Filterstruktur aus einem Lagenstapel aus miteinander verpressten Vlieslagen ausgebildet ist. Erfindungsgemäß ist auf einer Vorderseite und auf einer Rückseite des Lagenstapels jeweils wenigstens eine der Vlieslagen wenigstens einseitig mit einer Kupfer und/oder eine Kupferlegierung zu mindestens 80 Gew.% aufweisenden Schicht flächig beschichtet, wobei zwischen diesen beschichteten Vlieslagen mehrere unbeschichtete Vlieslagen angeordnet sind.

## Beschreibung

Die vorliegende Erfindung betrifft eine Atemschutzmaske mit einem eine Filterstruktur aufweisenden Maskenkörper und einer Kopfhalterung, wobei die Filterstruktur aus einem Lagenstapel aus miteinander verpressten Vlieslagen ausgebildet ist.

Aus dem Stand der Technik sind gattungsgemäße, partikelfiltrierende Atemschutzmasken in Form von FFP-Masken bekannt, welche aus einer Anzahl zusammengepresster Vlieslagen ausgebildet sind, in die ein Ausatemventil eingebracht sein kann.

Zum Beispiel weisen bekannte FFP2-Masken im Inneren der Maske 5 bis 7 Vlieslagen auf, wovon 2 Vlieslagen Meltblown-Vlieslagen sind. Die Meltblown-Vlieslagen erzeugen zwar durch ihre statische Aufladung einen Schutz vor Viren, welcher jedoch aufgrund des Ausatmens aber auch durch Witterungseinflüsse an Wirksamkeit nach und nach abnimmt, weshalb solche Atemschutzmasken nur einen Tag getragen werden sollten.

Die bekannten Atemschutzmasken schützen Mund und Nase des Trägers der Atemschutzmaske vor in der Umgebung befindlichen Partikeln Sekrettröpfchen, die Keime enthalten können. Ferner werden auch Personen, die sich in der Nähe des Trägers der Atemschutzmaske befinden, vor dessen Atem geschützt. Solche Atemschutzmasken können zwar Keime in gewisser Weise vom Körper fernhalten, töten diese Keime jedoch nicht ab. Bei einer hohen Keimbelastung ist es daher notwendig, Spezialatemschutzmasken zu tragen, die nach wenigen Stunden aus hygienischen Gründen entweder entsorgt werden müssen oder bei welchen nach einer Einsatzzeit von wenigen Stunden die Partikelfilter ausgetauscht und die Masken desinfiziert werden müssen. Dies ist jeweils mit einem hohen finanziellen Aufwand verbunden, sodass solche Atemschutzmasken im Wesentlichen für medizinisches Fachpersonal geeignet, aber für Privatpersonen nicht erschwinglich sind.

Aus der Druckschrift WO 2013/010535 A2 ist ein rundzylindrischer, luftdurchlässiger Filter für einen Einbau in eine Atemschutzmaske bekannt. Der Filter weist ein Filtermaterial auf, in das ein Abschirmmaterial zum Schutz des Trägers der Atemschutzmaske vor Strahlenbelastungen durch sich in dem Atemschutzfilter ansammelnden radioaktiven Substanzen eingebettet ist. Als Abschirmmaterial wird Blei, Gold, Silber, Zinn oder Kupfer verwendet. Die genannten Metalle können in Form von Wolle aus einer Vielzahl dünner Fäden ausgebildet sein. Das Abschirmmaterial ist entweder in dem gesamten Filtermaterial dispergiert oder nur in einem einer Maskeninnenseite zugewandten Teilbereich des Filters vorgesehen.

Bedingt durch die Gefahr, die insbesondere derzeit durch das Coronavirus ausgeht, ist es nicht nur für Klinikpersonal, sondern eigentlich für jede Person notwendig, insbesondere den Mund- und Nasenbereich vor Keimen zu schützen.

Kupfer zeigt für viele Mikroorganismen schon in geringen Mengen toxische Eigenschaften auf und kann daher zuverlässig zur Abtötung von Keimen und Mikroorganismen, wie Bakterien, Viren, Algen und Pilzen, verwendet werden. Andererseits ist Kupfer unschädlich für den Menschen.

Werden Mund- und Nasen-Schutzmasken als Atemschutzmasken verwendet, ist zu berücksichtigen, dass diese nicht nur mit der Umgebungsluft in Kontakt kommen, sondern - zumindest von Nichtmedizinern - auch mit den Händen angefasst werden, um aufgesetzt und abgenommen zu werden, wobei auch an den Händen Keime vorhanden sein können. Der in der Druckschrift WO 2013/010535 A2 beschriebene Atemschutzfilter bietet hierfür keinen geeigneten Schutz.

In der Druckschrift DE 198 03 921 A1 ist ein Filter für den Mundschutz mit Quecksilberabsorbierender und keimtötender, bakterizider Wirkung bekannt, der aus zwei Faservliesen ausgebildet ist, von welchen eines auf der Einströmseite und das andere auf der Ausströmseite des Filters mit einem amalgambildenden Metall, wie Gold, Silber, Kupfer, Zinn oder Zink, beschichtet ist.

Die Druckschrift DE 199 35 500 A1 offenbart ein Kupferpartikel enthaltendes Beschichtungsmittel zur Verhinderung und zum Abbau von unerwünschtem Bewuchs auf Bedachungen.

Aus der Druckschrift US 2017/0209719 A1 ist eine keimtötende Gesichtsschutzmaske bekannt, welche eine Filterstruktur aus einer sterilisierenden, Silberionen enthaltenden Filtervliesschicht, einee elektrostatischen Schicht, einer Vliesschicht mit superfeinen Kalziumionen und einer aus einem Vlies ausgebildeten Gesichtsschutzschicht sowie ein in die Filterstruktur eingebrachtes Ausatemventil aufweist.

Die Druckschrift US 2008/0295843 A1 beinhaltet eine wiederverwendbare Gesichtsschutzmaske mit einer mehrlagigen Filterstruktur und einer daran befestigten Kopfhalterung. An beiden äußeren Lagen der Filerstruktur haften mit Silber- und/oder Kupferionen beladene Zeolithen.

In der Druckschrift KR 10 2004 0 106 959 A ist eine Atemschutzmaske mit einer aus drei lagen bestehenden Filterstruktur beschrieben, deren äußere Filterlagen aus gewebter Baumwolle mit horizontal eingelagerten feinen Kupferfäden und deren innere Filterlage aus einem Kupfer und Anionen enthaltenden Gittergewebe besteht.

Es ist daher die Aufgabe der vorliegenden Erfindung, eine ohne aufwändige Schutzmaßnahmen aufsetz- und abnehmbare und trotzdem effektiv vor Mikroorganismen schützende Atemschutzmaske zur Verfügung zu stellen.

Diese Aufgabe wird erfindungsgemäß durch Atemschutzmaske mit einem eine Filterstruktur aufweisenden Maskenkörper und einer Kopfhalterung gelöst, wobei die Filterstruktur aus einem Lagenstapel aus miteinander verpressten Vlieslagen ausgebildet ist, wobei auf einer Vorderseite und auf einer Rückseite des Lagenstapels jeweils wenigstens eine der Vlieslagen wenigstens einseitig mit einer Kupfer und/oder eine Kupferlegierung zu mindestens 80 Gew.% aufweisenden Schicht flächig beschichtet ist, wobei zwischen diesen beschichteten Vlieslagen mehrere unbeschichtete Vlieslagen angeordnet sind.

Bei der erfindungsgemäßen Atemschutzmaske befinden sich sowohl auf der Vorder- als auch auf der Rückseite des Maskenkörpers Kupfer enthaltende Lagen, aus welchen Kupferionen austreten können, welche antimikrobiell wirken. Diese Kupferionen schützen vor Bakterien, Viren und/oder Pilzen. Somit kann ein Träger dieser Maske diese ungehindert mit seinen Händen anfassen, wobei eventuell an den Händen befindliche Keime mittels der Kupferionen unschädlich gemacht werden und somit nicht in die Atemwege des Trägers der Atemschutzmaske gelangen können. Auch in der Umgebungsluft des Trägers befindliche Keime gelangen durch die keimtötende Wirkung der Kupferionen nicht in Mund und Nase des Trägers. Ebenso wird durch die erfindungsgemäße Atemschutzmaske verhindert, dass Keime, die sich eventuell in der Ausatemluft des Trägers der Atemschutzmaske befinden, in die Umgebung gelangen.

Die das Kupfer und/oder die Kupferlegierung aufweisende Schicht kann so dünn auf der jeweiligen Vlieslage abgeschieden werden, dass die Luftdurchlässigkeit der erfindungsgemäßen Atemschutzmaske kaum oder gar nicht beeinträchtigt ist.

Trotz solch dünner Schichtdicke(n) bildet die das Kupfer und/oder die Kupferlegierung aufweisende Schicht ein nahezu unbegrenztes Reservoir für die Freigabe von Kupferionen.

Die erfindungsgemäße Atemschutzmaske bietet gegenüber beispielsweise FFP2-Masken den Vorteil, dass sie mehrfach wiederverwendbar ist, je nach Einsatzzweck zwei bis vier Wochen.

In einer bevorzugten Ausführungsform der vorliegenden Erfindung sind die auf der Vorder- und der Rückseite des Lagenstapels befindlichen Vlieslagen beidseitig mit der Kupfer und/oder die Kupferlegierung aufweisenden Schicht beschichtet. Dadurch dringt das Kupfer und/oder die Kupferlegierung von beiden Seiten in die jeweilige Vlieslage ein und haftet dadurch langzeitstabil an den Außenseiten des Maskenkörpers.

In einer besonders praktikablen Ausführungsform der vorliegenden Erfindung ist die jeweilige das Kupfer und/oder die Kupferlegierung aufweisende Schicht aus in einen Polyurethanlack eingearbeitetem 99,8 %igen Kupferpulver ausgebildet.

Diese Schicht hält besonders gut und dauerhaft an der jeweiligen Vlieslage. Zudem kann bei einer solchen Schicht das Kupferpulver besonders gleichmäßig verteilt auf die jeweilige Vlieslage aufgebracht werden, sodass eine gleichmäßige antimikrobielle Wirkung erzielt wird.

Vorzugsweise weist das hierfür verwendete das Kupferpulver Kupferpartikel mit einem Durchmesser zwischen 0,2 µm und 30 µm, bevorzugt von 0,5 µm bis 20 µm, besonders bevorzugt von 1 µm bis 18 µm, auf. Die sehr kleinen Kupferpartikel ermöglichen es, dass die erfindungsgemäße Atemschutzmaske mit einer guten Atmungsaktivität zur Verfügung gestellt werden kann.

Vorzugsweise sind bei einer Ausführungsform der erfindungsgemäßen Atemschutzmaske Lagendicken der auf der Vorderseite und auf der Rückseite des Lagenstapels liegenden Vlieslagen, jeweils ohne Beschichtung mit der das Kupfer und/oder die Kupferlegierung zu mindestens 80 Gew.% aufweisenden Schicht, geringer als Lagendicken der inneren Vlieslagen des Lagenstapels. Dadurch bleiben die äußerste Lage als auch die innerste Lage des Lagenstapels auch dann noch flexibel, wenn sie mit der das Kupfer und/oder die Kupferlegierung aufweisenden Schicht beschichtet sind.

Vorteilhaft ist auch, wenn auf der das Kupfer und/oder die Kupferlegierung zu mindestens 80 Gew.% aufweisenden Schicht eine antimikrobielle Lackbeschichtung ausgebildet ist. Die antimikrobielle Lackbeschichtung verleiht der das Kupfer und/oder die Kupferlegierung aufweisenden Schicht einen mechanischen Schutz. Sie verkapselt das Kupfer und/oder die Kupferlegierung. Zudem schützt die antimikrobielle Lackbeschichtung zusätzlich vor Mikroorganismen. Eine Keimbelastung auf der Oberfläche der Atemschutzmaske wird durch die antimikrobielle Schutzbeschichtung dauerhaft neutralisiert. Außerdem kann die Atemschutzmaske mit der antimikrobiellen Lackbeschichtung farblich gestaltet werden, sodass beispielsweise durch unterschiedliche Farbgebung bei mehreren der erfindungsgemäßen Atemschutzmasken ein Tragerhythmus festgelegt werden kann.

Besonders von Vorteil ist es, wenn wenigstens eine innere Vlieslage des Lagenstapels eine Meltblown-Spinnvlies-Lage ist. Die Meltblown-Spinnvlies-Lage ist statisch aufgeladen. Die statische Aufladung schafft einen zusätzlichen Schutz vor Viren. Zudem weist die Meltblown-Spinnvlies-Lage eine gegenüber anderen Vlieslagen erhöhte Dichte auf, durch welche sich eine hohe bakterielle Filterleistung dieser Vlieslage ergibt. Selbst wenn die statische Aufladung der Meltblown-Spinnvlies-Lage bei dieser Ausführungsform der erfindungsgemäßen Atemschutzmaske mit der Zeit abnimmt, sorgt die wenigstens eine, das Kupfer und/oder die Kupferlegierung zu mindestens 80 Gew.% aufweisende Schicht für eine dauerhafte, aktive Vireninaktivierung.

Vorzugsweise ist in den Maskenkörper ein Ausatemventil eingebracht.

In einer vorteilhaften Ausführungsform der erfindungsgemäßen Atemschutzmaske weist das Ausatemventil einen mit Kupfer und/oder einer Kupferlegierung beschichteten Spinnvlies-Filter auf. So wird auch in der durch das Ausatemventil nach außen abgegebene Ausatemluft aktiv Viren inaktiviert.

Eine bevorzugte Ausführungsform der erfindungsgemäßen Atemschutzmaske, deren Aufbau, Funktion und Vorteile, wird im Folgenden anhand von Figuren näher erläutert, wobei
- Figur 1: schematisch eine Vorderansicht eines Kopfes einer Person zeigt, die eine Ausführungsform der erfindungsgemäßen Atemschutzmaske trägt; und
- Figur 2: schematisch eine Filterstruktur einer Ausführungsform der erfindungsgemäßen Atemschutzmaske in einer Querschnittsansicht zeigt.

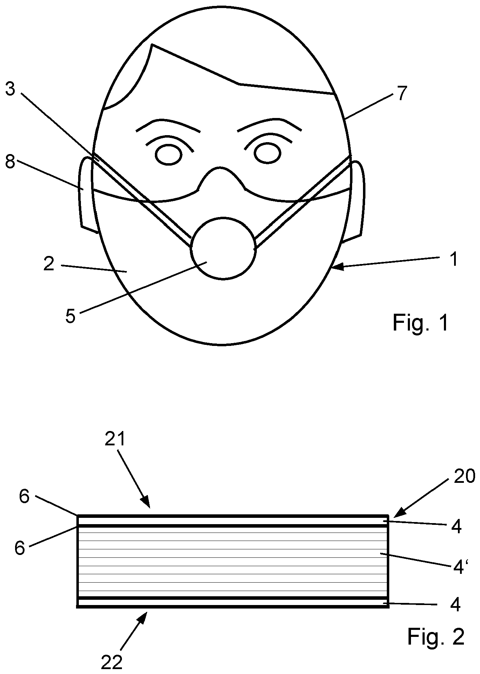

Figur 1 zeigt schematisch eine Vorderansicht eines Kopfes 7 einer Person zeigt, die eine Ausführungsform der erfindungsgemäßen Atemschutzmaske 1 trägt.

Die Atemschutzmaske 1 weist einen Maskenkörper 2 auf, der auf Mund und Nase der Person gestülpt wird und der mittels einer hier in Form von Haltegummis ausgebildeten Kopfhalterung 3 an dem Kopf der Person, hier an den Ohren 8 der Person, gehalten wird.

In einem Ausatembereich der Atemschutzmaske 1 ist an dieser ein Ausatemventil 5 vorgesehen. In anderen Ausführungsformen der Atemschutzmaske kann das Ausatemventil auch weggelassen werden.

Der Maskenkörper 2 weist eine Filterstruktur 20 auf, die schematisch in Figur 2 dargestellt ist. Die Filterstruktur 20 besteht aus einem Lagenstapel aus mehreren Vlieslagen 4, 4'. Die Vlieslagen 4, 4' sind miteinander verpresst.

Die in dem gezeigten Beispiel verwendeten Vlieslagen 4, 4' bestehen jeweils aus einem Filtervlies aus Polypropylen. Jede der Vlieslagen 4, 4' weist in dem gezeigten Beispiel eine Dicke von 0,2 mm auf. Die jeweiligen Vlieslagen 4, 4' haben in dem Ausführungsbeispiel eine Luftdurchlässigkeit von 5000 l/m²/s und eine Porengröße von 110 µm.

In anderen Ausführungsformen der Erfindung können die auf der Vorderseite 21 und die auf der Rückseite 22 liegenden Vlieslagen 4, jeweils ohne die das Kupfer aufweisende Schicht 6, auch eine geringere Lagendicke als die inneren Vlieslagen 4' des Lagenstapels aufweisen.

Die sich auf einer Vorderseite 21 und einer Rückseite 22 der Filterstruktur befindlichen Vlieslagen 4 sind in dem gezeigten Ausführungsbeispiel jeweils beidseitig mit einer Kupfer aufweisenden Schicht 6 beschichtet. In anderen, nicht gezeigten Ausführungsformen der vorliegenden Erfindung kann anstelle oder zusätzlich zu der Kupfer aufweisenden Schicht 6 eine wenigstens eine Kupferlegierung, wie Messing, aufweisende Schicht eingesetzt werden.

Die das Kupfer und/oder die Kupferlegierung aufweisende Schicht 6 weist zu mindestens 80 Gew.%, vorzugsweise zu mindestens 90 Gew.%, besonders bevorzugt zu mindestens 95 Gew.% Kupfer oder die Kupferlegierung auf.

Die zwischen den beschichteten Vlieslagen 4 liegenden Vlieslagen 4' sind nicht mit einer Kupfer und/oder eine Kupferlegierung aufweisenden Schicht beschichtet.

Obwohl in der gezeigten Ausführungsform jeweils nur eine einzige Vlieslage 4 auf der Vorderseite 21 und eine Vlieslage 4 auf der Rückseite 22 des Lagenstapels mit der das Kupfer aufweisenden Schicht 6 beschichtet wurde, können auf der Vorderseite 21 und/oder der Rückseite 22 auch mehrere Vlieslagen 4 mit einer solchen Beschichtung versehen sein.

Die Beschichtung der jeweiligen Vlieslage 4 mit der das Kupfer aufweisenden Schicht 6 kann in anderen Ausführungsformen der Erfindung auch nur auf einer Seite der jeweiligen Vlieslage 4 vorgesehen sein. Dies kann beispielsweise dann von Vorteil sein, wenn mehrere, aufeinander liegende Vlieslagen 4 mit der Kupfer aufweisenden Schicht 6 beschichtet sind.

In dem gezeigten Ausführungsbeispiel ist die das Kupfer aufweisende Schicht 6 aus 99,8 %igem Kupferpulver, das in Polyurethanlack eingearbeitet ist, ausgebildet. In dem gezeigten Ausführungsbeispiel weist das Kupferpulver Kupferpartikel mit einem Durchmesser von durchschnittlich 17,9 µm auf. In anderen Ausführungsformen der Erfindung kann dieser Durchmesser in einem Bereich von 0,2 µm bis 30 µm liegen.

Vorzugsweise ist wenigstens eine der inneren Vlieslagen 4' eine Meltblown-Spinnvlies-Lage.

In einer einfachen Ausführungsform der erfindungsgemäßen Atemschutzmaske besteht der Lagenstapel aus vier Vlieslagen 4, 4', nämlich aus einer Spinnvlieslage 4, die mit einer Kuper und/oder eine Kupferlegierung aufweisenden Schicht 6 beschichtet ist, einer nicht beschichteten Spinnvlieslage 4, einer Meltblown-Spinnvlies-Lage 4' und einer weiteren, mit einer Kuper und/oder eine Kupferlegierung aufweisenden Schicht 6 beschichteten Spinnvlieslage 4.

In einer weiteren Ausführungsform der erfindungsgemäßen Atemschutzmaske besteht der Lagenstapel aus sieben Vlieslagen 4, 4', nämlich aus einer Spinnvlieslage 4, die mit einer Kuper und/oder eine Kupferlegierung aufweisenden Schicht 6 beschichtet ist, einer Meltblown-Spinnvlies-Lage 4', einer nicht beschichteten Spinnvlieslage 4, einer weiteren, mit einer Kuper und/oder eine Kupferlegierung aufweisenden Schicht 6 beschichteten Spinnvlieslage 4, einer weiteren, nicht beschichteten Spinnvlieslage 4, einer weiteren Meltblown-Spinnvlies-Lage 4' und noch einer weiteren, mit einer Kuper und/oder eine Kupferlegierung aufweisenden Schicht 6 beschichteten Spinnvlieslage 4.

Eine andere Ausführungsform der erfindungsgemäßen Atemschutzmaske weist einen Lagenstapel aus neun Vlieslagen 4, 4', nämlich aus einer Spinnvlieslage 4, die mit einer Kuper und/oder eine Kupferlegierung aufweisenden Schicht 6 beschichtet ist, einer Meltblown-Spinnvlies-Lage 4', einer nicht beschichteten Spinnvlieslage 4, einer weiteren, mit einer Kuper und/oder eine Kupferlegierung aufweisenden Schicht 6 beschichteten Spinnvlieslage 4, einer weiteren Meltblown-Spinnvlies-Lage 4', zwei weiteren, nicht beschichteten Spinnvlieslagen 4, noch einer weiteren Meltblown-Spinnvlies-Lage 4' und noch einer weiteren, mit einer Kuper und/oder eine Kupferlegierung aufweisenden Schicht 6 beschichteten Spinnvlieslage 4.

## Patentansprüche

1. Atemschutzmaske (1) mit einem eine Filterstruktur (20) aufweisenden Maskenkörper (2) und einer Kopfhalterung (3), wobei die Filterstruktur (20) aus einem Lagenstapel aus miteinander verpressten Vlieslagen (4, 4') ausgebildet ist,
**dadurch gekennzeichnet,**
**dass** auf einer Vorderseite (21) und auf einer Rückseite (22) des Lagenstapels jeweils wenigstens eine der Vlieslagen (4) wenigstens einseitig mit einer Kupfer und/oder eine Kupferlegierung zu mindestens 80 Gew.% aufweisenden Schicht (6) flächig beschichtet ist, wobei zwischen diesen beschichteten Vlieslagen (4) mehrere unbeschichtete Vlieslagen (4') angeordnet sind.

2. Atemschutzmaske nach Anspruch 1, **dadurch gekennzeichnet, dass** die Vlieslagen (4) beidseitig mit der Kupfer und/oder die Kupferlegierung aufweisenden Schicht (6) beschichtet sind.

3. Atemschutzmaske nach einem der vorhergehenden Ansprüche, **dadurch gekennzeichnet, dass** die jeweilige das Kupfer und/oder die Kupferlegierung aufweisende Schicht (6) aus in einen Polyurethanlack eingearbeitetem 99,8 %igen Kupferpulver ausgebildet ist.

4. Atemschutzmaske nach Anspruch 3, **dadurch gekennzeichnet, dass** das Kupferpulver Kupferpartikel mit einem Durchmesser zwischen 0,2 µm und 30 µm aufweist.

5. Atemschutzmaske nach einem der vorhergehenden Ansprüche, **dadurch gekennzeichnet, dass** Lagendicken der auf der Vorderseite (21) und auf der Rückseite (22) des Lagenstapels liegenden Vlieslagen (4, 4'), jeweils ohne Beschichtung mit der das Kupfer und/oder die Kupferlegierung zu mindestens 80 Gew.% aufweisenden Schicht (6), geringer als Lagendicken der inneren Vlieslagen (4, 4') des Lagenstapels sind.

6. Atemschutzmaske nach einem der vorhergehenden Ansprüche, **dadurch gekennzeichnet, dass** auf der das Kupfer und/oder die Kupferlegierung zu mindestens 80 Gew.% aufweisenden Schicht (6) eine antimikrobielle Lackbeschichtung ausgebildet ist.

7. Atemschutzmaske nach einem der vorhergehenden Ansprüche, **dadurch gekennzeichnet, dass** wenigstens eine innere Vlieslage (4, 4') des Lagenstapels eine Meltblown-Spinnvlies-Lage ist.

8. Atemschutzmaske nach einem der vorhergehenden Ansprüche, **dadurch gekennzeichnet, dass** in den Maskenkörper (2) ein Ausatemventil (5) eingebracht ist.

9. Atemschutzmaske nach Anspruch 8, **dadurch gekennzeichnet, dass** das Ausatemventil einen mit Kupfer und/oder einer Kupferlegierung beschichteten Spinnvlies-Filter aufweist.
